Europäisches Patentamt

(19) European Patent Office

Office européen des brevets

(11) Veröffentlichungsnummer: **0 061 595**
B1

(12) # EUROPÄISCHE PATENTSCHRIFT

(45) Veröffentlichungstag der Patentschrift:
18.12.85

(51) Int. Cl.⁴: **G 09 B 21/00, G 06 F 3/00**

(21) Anmeldenummer: 82101598.9

(22) Anmeldetag: 02.03.82

(54) Informationsein- und -ausgabeeinheit für Datenverarbeitungseinrichtungen.

(30) Priorität: 27.03.81 DE 8108980 U

(43) Veröffentlichungstag der Anmeldung:
06.10.82 Patentblatt 82/40

(45) Bekanntmachung des Hinweises auf die Patenterteilung:
18.12.85 Patentblatt 85/51

(84) Benannte Vertragsstaaten:
AT CH DE FR GB LI NL SE

(56) Entgegenhaltungen:
DE - A - 2 510 052
FR - A - 2 282 677

ELECTRONICS INTERNATIONAL, Band 53, Nr. 20, September 1980, Seiten 77-78, New York, USA, J. GOSCH: "Aids for blind" read" books, speak temperatures"
IBM TECHNICAL DISCLOSURE BULLETIN, Band 18, Nr. 12, Mai 1976, Seiten 4150-4151, New York, USA, E.G. NASSIMBENE et al.: "Display for the blind"
IBM TECHNICAL DISCLOSURE BULLETIN, Band 23, Nr. 4, September 1980, Seiten 1727-1731, New York, USA R.G. HEATH: "Braille display protable electronic calculator"
Prospekt der Fa. Schönherr:
"Blindenschrift-Grobdisplay für Terminals BD 80 T"

(73) Patentinhaber: Nixdorf Computer Aktiengesellschaft, Fürstenallee 7, D-4790 Paderborn (DE)

(72) Erfinder: Burchart, Joachim, Am Fichtenhain 14, D-4797 Schlangen 2 (DE)

(74) Vertreter: Patentanwälte Schaumburg & Thoenes, Mauerkircherstrasse 31 Postfach 86 07 48, D-8000 München 86 (DE)

## Beschreibung

Die Erfindung betrifft eine Informationsein- und -ausgabeeinheit für Datenverarbeitungseinrichtungen, umfassend eine Eingabetastatur und ein taktiles Anzeigefeld mit einer Steuertastatur zur taktilen Datenanzeige für Sehbehinderte.

Eine solche Informationsein- und -ausgabeeinheit soll Sehbehinderten die Möglichkeit geben, in der gleichen Weise wie sehende Personen Arbeiten an einem Datenendgerät oder einer Bildschirmstation übernehmen zu können.

Aus dem Werbeprospekt «BRAILINK» der englischen Firma Clarke und Smith Manufacturing Co., Ltd. ist bereits eine Einheit der eingangs genannten Art bekannt, bei welcher eine taktile Ausgabezeile auf einer Stufe erhöht hinter der Eingabetastatur angeordnet ist. Dadurch muss beim Abtasten der Ausgabezeile die tastende Hand weit vorgestreckt und frei über der Eingabetastatur gehalten werden, was zu schneller Ermüdung der Bedienungsperson führt.

Auf Seite 1727 der Druckschrift «IBM Technical Disclosure Bulletin», Band 23, Nr. 4, September 1980 ist ein tragbarer elektronischer Rechner mit einem taktilen Anzeigefeld und einer Eingabetastatur dargestellt, bei dem das taktile Anzeigefeld und die Eingabetastatur in einer Ebene angeordnet sind. Dieser tragbare elektronische Rechner ist ausschliesslich für den Gebrauch durch Blinde bestimmt und besitzt keine Steuertastatur für das taktile Anzeigefeld.

Bei einer weiteren, aus einem Prospekt der Firma Schönherr GmbH bekannten Einheit der eingangs genannten Art sind das zwei taktile Ausgabezeilen umfassende Anzeigefeld und die Steuertastatur in einem von der Eingabetastatur separaten Gehäuse untergebracht, wobei das Anzeigefeld, die Steuertastatur und die Eingabetastatur in verschiedenen Ebenen liegen. Hierdurch ergibt sich der Nachteil, dass zwischen dem Anzeigefeld und der Eingabetastatur eine auf- oder absteigende Stufe entsteht und die Eingabetastatur keine feste räumliche Position relativ zum Anzeigefeld hat. Dadurch wird die Orientierung zwischen dem Anzeigefeld und der Eingabetastatur für den Sehbehinderten erschwert. Das gleiche gilt auch in eingeschränktem Umfang für die Orientierung zwischen dem Anzeigefeld und der Steuertastatur.

Der Erfindung liegt die Aufgabe zugrunde, eine Informationsein- und -ausgabeeinheit der oben genannten Art anzugeben, die für eine sehbehinderte Bedienungsperson bequem und auch über längere Zeiträume ohne Ermüdung zu bedienen ist, die ein zügiges Arbeiten ermöglicht und die zudem flexibel einsetzbar ist. Darüberhinaus soll die Eingabetastatur auch von sehenden Personen unabhängig verwendet werden können.

Diese Aufgabe wird ausgehend von der in dem Prospekt der Firma Schönherr beschriebenen Informationsein- und -ausgabeeinheit für Datenverarbeitungsanlagen erfindungsgemäss dadurch gelöst, dass die Eingabetastatur, die Steuertastatur und das taktile Anzeigefeld in einer Ebene angeordnet sind, dass das taktile Anzeigefeld zusammen mit der Steuertastatur – von der Bedienungsperson aus gesehen – vor der Eingabetastatur liegt, dass vor dem taktilen Anzeigefeld eine Handauflagefläche vorgesehen ist, dass das taktile Anzeigefeld mit der Steuertastatur in einem ersten Gehäuse und die Eingabetastatur in einem von diesem getrennten zweiten Gehäuse angeordnet ist und dass das erste Gehäuse eine zur Aufnahme des zweiten Gehäuses bestimmte Aufnahmemulde aufweist, deren Abmessungen auf die Aussenabmessungen des zweiten Gehäuses derart abgestimmt sind, dass die Deckflächen beider Gehäuse aneinander anschliessend in einer Ebene liegen.

Durch die Anordnung der beiden Tastaturen und des Anzeigefeldes in einer Ebene wird die Orientierung beim Übergang zwischen den Tastaturen und dem Anzeigefeld für den Sehbehinderten erheblich erleichtert. Ferner kann der Sehbehinderte die Hände körpernah und entspannt beim Abtasten des Anzeigefeldes auf die Handauflagefläche auflegen, so dass er ohne Ermüdung auch längere Zeit an der Informationsein- und -ausgabeeinheit arbeiten kann. Die Verwendung zweier voneinander trennbarer Gehäuse für das taktile Anzeigefeld und die Steuertastatur einerseits und für die Eingabetastatur andererseits hat ferner den Vorteil, dass die Eingabetastatur auch von sehenden Bedienungspersonen unabhängig von dem Zusatzgerät verwendet werden kann, welches das taktile Anzeigefeld und die Steuertastatur umfasst. Ferner besteht dadurch die Möglichkeit, die räumliche Zuordnung zwischen dem taktilen Anzeigefeld und der Eingabetastatur zu ändern, falls dies doch einmal gewünscht oder nötig werden sollte.

Um das zweite Gehäuse auch ohne spezielle Befestigungsmittel unverrückbar an dem ersten Gehäuse fest zu halten und damit die feste räumliche Zuordnung von Eingabetastatur und Anzeigefeld zu sichern, weist das zweite Gehäuse zweckmässigerweise an seiner Unterseite einen Sockel auf, der um die Wandstärke der Gehäusewände des ersten Gehäuses zurückversetzt und zum Eingriff in die in Form einer Aufnahmemulde ausgebildete Aussparung des ersten Gehäuses bestimmt ist. Zweckmässigerweise ist dabei in dem ersten Gehäuse unterhalb der Aufnahmemulde ein Kabelstauraum ausgebildet, dessen Boden eine Durchtrittsöffnung für ein Anschlusskabel der Eingabetastatur aufweist.

Vorzugsweise besteht das erste Gehäuse aus einer wannenförmigen Unterschale und einer mit dieser verbindbaren Oberschale, die ringsherum geringfügig über die Unterschale vorsteht. Dies gibt die Möglichkeit, die Informationsein- und -ausgabeeinheit als Einbaugerät in eine entsprechende Öffnung eines Tisches einzusetzen, so dass es mit dem überstehenden Rand der Oberschale auf der Tischfläche aufliegt. Um diesen Einbau zu ermöglichen, sind ferner sämtliche Bedienungselemente in der Oberschale angeordnet.

Für den Fall, dass doch einmal die räumliche Zuordnung zwischen Eingabetastatur und Anzeigefeld umgekehrt und die Eingabetastatur vor dem Anzeigefeld angeordnet werden sollte, ist es zweckmässig, wenn die Höhe des zweiten Gehäuses an seinem rückwärtigen Ende annähernd gleich der Höhe des ersten Gehäuses an dessen vorderem Ende ist, so dass Eingabetastatur und Anzeigefeld wiederum annähernd in einer Ebene liegen.

Die Informationsein- und -ausgabeeinheit soll in allen ihren Funktionen ein Äquivalent zu einer Bildschirmstation sein. Auf einem Bildschirm werden im allgemeinen vier Arten von Informationen ausgegeben bzw. angezeigt. Dies sind

1. die aktuelle, in Arbeit befindliche Information,

2. die Anzeige durch einen auf dem Bildschirm dargestellten sogenannten Cursor oder Blinker, wo derzeit die Bearbeitung stattfindet,

3. Leitinformationen, wie z.B. Formularanweisungen (Name, Datum, etc.) oder Spaltenüberschriften, und

4. Betriebsstatusinformationen, die im allgemeinen auf einer Sonderzeile des Bildschirmes oder durch Lampenanzeigen auf der Eingabetastatur dargestellt werden.

Von diesen Informationen ist die Leitinformation im allgemeinen für eine bestimmte Arbeit unverändert. Um auf einfache und preiswerte Weise die Leitinformation für den Sehbehinderten darstellen zu können wird erfindungsgemäss vorgeschlagen, dass bei einem taktilen Anzeigefeld mit mindestens einer Ausgabezeile parallel zu dieser Zeile und angrenzend an diese in der Gehäusedeckfläche mindestens eine Aufnahmenut zur Aufnahme eines Informationsstreifens ausgebildet ist, der die Leitinformation in taktilen Zeichen enthalten kann. Dieser Informationsstreifen kann aus Kunststoff, Pappe oder dergleichen hergestellt sein und kann jeweils für die vorgesehene Arbeit eingelegt und ausgewechselt werden. Damit entfällt eine teure elektronisch angesteuerte taktile Ausgabezeile zur Darstellung der Leitinformationen. Durch die Aufnahmenut für den Informationsstreifen ist dennoch eine exakte Ausrichtung der Leitinformationen relativ zu den in den taktilen Ausgabezeilen dargestellten Zeichen sichergestellt.

Um das Auswechseln der Informationsstreifen zu erleichtern, ist zweckmässigerweise in der Grundfläche der jeweiligen Aufnahmenut entlang eines ihrer Ränder eine Vertiefung ausgebildet. Drückt man den Informationsstreifen entlang eines seiner Ränder in die Vertiefung, so hebt sich sein anderer Rand aus der Aufnahmenut heraus, so dass der Informationsstreifen bequem erfasst werden kann.

Zur Darstellung einer ganzen, üblicherweise achtzig Stellen umfassenden Bildschirmzeile werden vorzugsweise zwei taktile Ausgabezeilen verwendet, deren jede eine Halbzeile zu vierzig Stellen bildet. Entsprechend sind auch zwei Informationsstreifen oder -leisten als Träger der Leitinformation erforderlich. Die Anordnung kann dabei so getroffen sein, dass jeweils oberhalb einer taktilen Ausgabezeile eine Aufnahmenut zur Aufnahme eines Informationsstreifens vorgesehen ist. Vorzugsweise liegen jedoch die beiden taktilen Ausgabezeilen unmittelbar untereinander, während je ein Informationsstreifen oberhalb und ein Informationsstreifen unterhalb der beiden Zeilen angeordnet ist.

Die Steuertastatur ermöglicht eine Zuordnung der taktilen Ausgabezeilen zu verschiedenen Bildschirmzeilen sowie das Abfragen des Betriebsstatus und der Cursorfunktion. Die Bedienungsperson muss also ständig mit ihren Händen zwischen den taktilen Ausgabezeilen und der Steuertastatur hin und her wandern. Um die Orientierung dabei zu erleichtern und ein zügiges Arbeiten zu ermöglichen, ist erfindungsgemäss vorgesehen, dass die Steuertastatur annähernd im gleichen Abstand von der Vorderkante des ersten Gehäuses wie das Anzeigefeld neben diesem angeordnet ist und dass Fingerführungen zwischen dem taktilen Anzeigefeld und den Tasten der Steuertastatur vorgesehen sind. Beispielsweise können diese Fingerführungen von Rippen oder Nuten an der Gehäusedeckfläche gebildet sein, die sich von dem jeweiligen Ende einer Ausgabezeile zu den Tasten der Steuertastatur erstrecken, so dass die Bedienungsperson mit ihren Fingern entlang den Rippen oder Nuten zu bestimmten Tasten der Steuertastatur geführt wird. Wenn beispielsweise zwei taktile Ausgabezeilen vorgesehen sind, die hintereinander gelesen eine Bildschirmzeile ergeben, so ist es zweckmässig, im Anschluss an das letzte Zeichen der zweiten Ausgabezeile eine den Zeilenvorschub steuernde Taste der Steuertastatur anzuordnen.

Die Steuertastatur kann einen Umschalter enthalten, in dessen erster Stellung die Zeichen einer Bildschirmzeile fortlaufend auf eine Mehrzahl von Ausgabezeilen verteilt werden und in dessen zweiter Stellung jede Ausgabezeile einen ersten Abschnitt einer neuen Bildschirmzeile wiedergibt. Dies gibt die Möglichkeit, beispielsweise bei einer Aufteilung des Bildschirmes in zwei Spalten die Zeilen einer Spalte nacheinander auf den taktilen Ausgabezeilen abzubilden.

Als taktile Ausgabezeilen werden vorzugsweise Anordnungen verwendet, die in einem linken abgesetzten Bereich eine zweistellige Zusatzinformation über den Betriebsstatus, die Zeilennummer oder die Cursorstellung anbieten können und in dem rechten Bereich dann eine Halbzeile zu vierzig Stellen entsprechend der üblichen achtzigstelligen Bildschirmanzeige ausgeben.

Weitere Merkmale und Vorteile der Erfindung ergeben sich aus der folgenden Beschreibung, welche in Verbindung mit den beigefügten Zeichnungen die Erfindung anhand von Ausführungsbeispielen erläutert. Es zeigen:

Fig. 1 eine perspektivische Gesamtansicht einer in eine Tischplatte eingelassene Informationsein- und -ausgabeeinheit,

Fig. 2 eine der Fig. 1 entsprechende Ansicht, jedoch mit herausgenommener Eingabetastatur,

Fig. 3 eine teilweise geschnittene Seitenansicht der erfindungsgemässen Einheit,

Fig. 4 einen Längsschnitt durch eine Aufnahmenut für einen Informationsstreifen längs Linie IV–IV in Fig. 1,

Fig. 5 eine Draufsicht auf einen Informationsstreifen,

Fig. 6 eine der Fig. 2 entsprechende Ansicht einer zweiten Ausführungsform, und

Fig. 7 eine der Fig. 1 entsprechende Ansicht einer dritten Ausführungsform der Erfindung.

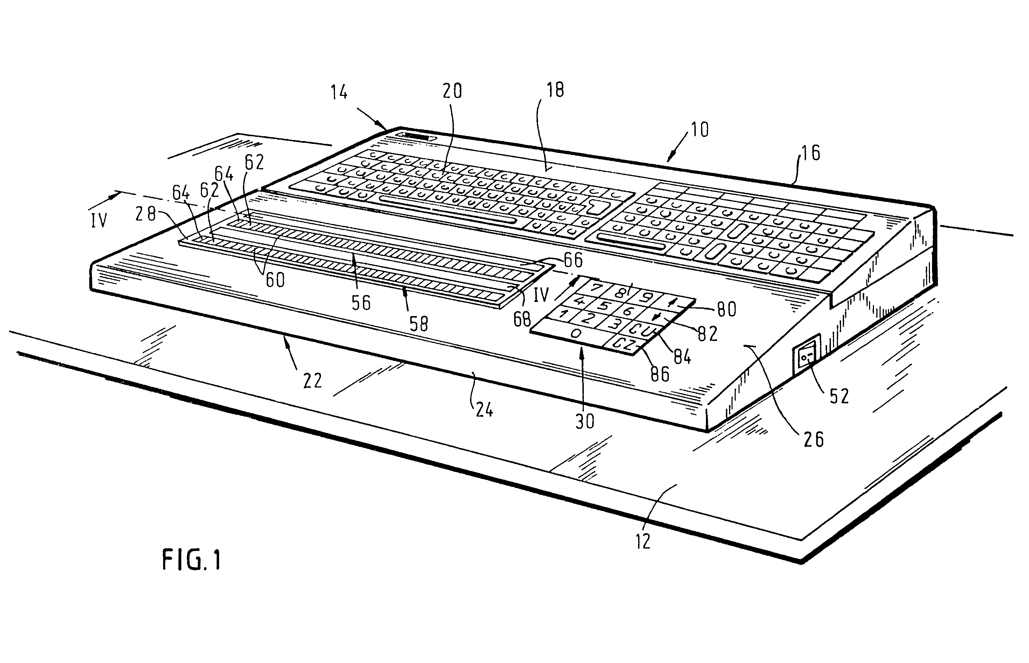

In der Fig. 1 erkennt man eine allgemein mit 10 bezeichnete, zur Bedienung durch sehbehinderte Personen bestimmte Informationsein- und -ausgabeeinheit, die in einen Arbeitstisch 12 eingesetzt ist. Die Einheit 10 ist an eine nicht dargestellte Datenverarbeitungsanlage angeschlossen und erfüllt die gleiche Funktion wie eine Bildschirmstation für sehende Bedienungspersonen.

Die Einheit 10 umfasst eine herkömmliche Eingabetastatur 14 mit einem flachen pultartigen Gehäuse 16, an dessen schräger Deckfläche 18 ein Tastenfeld 20 angeordnet ist.

Die Einheit 10 umfasst ferner eine taktile Ausgabeeinheit 22 mit einem flachen, ebenfalls pultförmigen Gehäuse 24 an deren schräger Deckfläche 26 man ein Ausgabe- oder Anzeigefeld 28 sowie die Tasten einer Steuertastatur 30 erkennt.

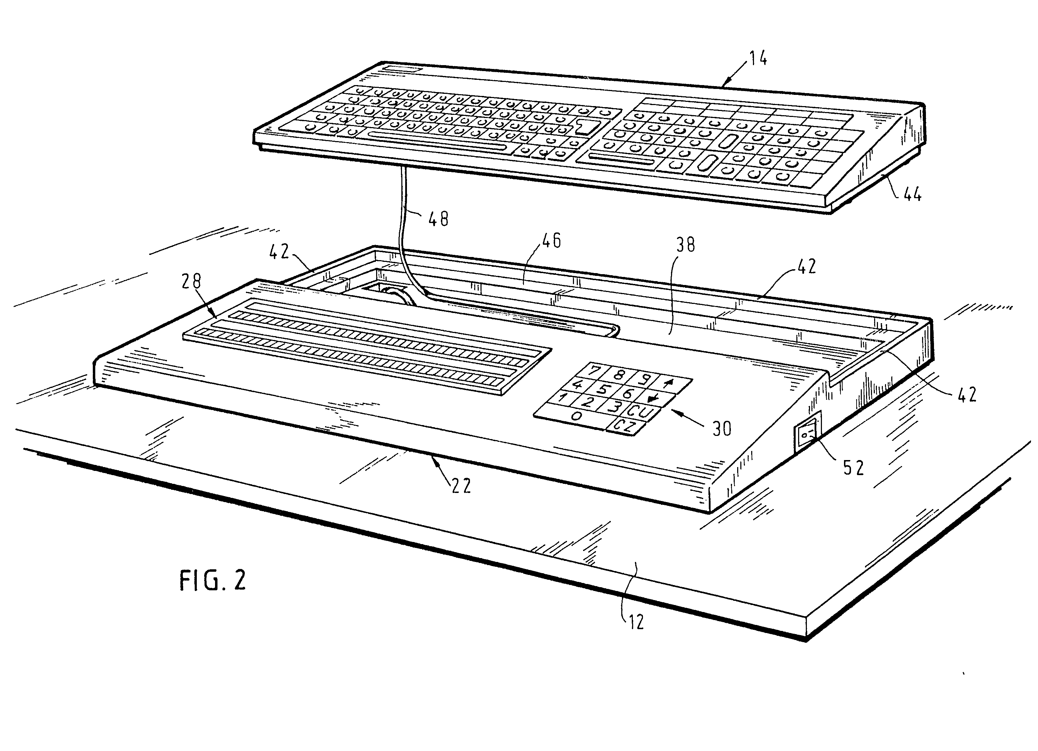

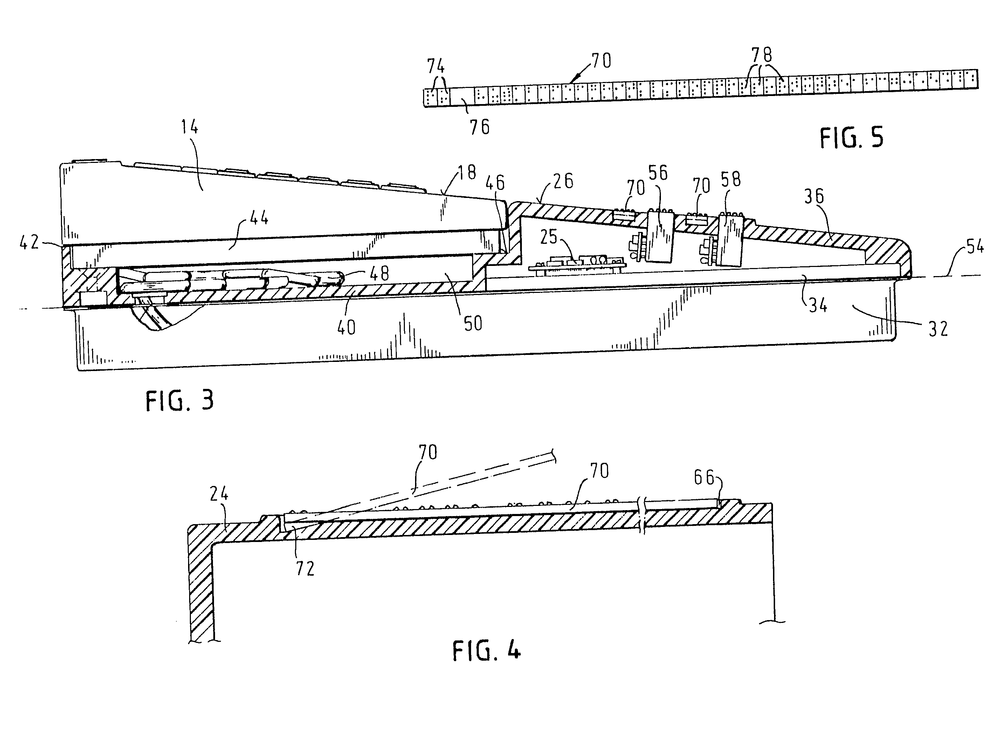

Das Gehäuse 24 der taktilen Ausgabeeinheit 22 umfasst gemäss Fig. 3 eine wannenförmige flache Unterschale 32 mit einem geringfügig nach aussen stehenden oberen Rand 34, auf den eine Oberschale 36 aufgesetzt ist, deren vorderer Abschnitt von der schräg zur Bedienungsperson hin abfallenden Deckfläche 26 gebildet ist. In ihrem hinteren Abschnitt weist die Oberschale eine flache Aufnahmemulde 38 auf (Fig. 2), die gegenüber der Unterschale durch einen Muldenboden 40 abgeteilt und von einer Randleiste 42 eingefasst ist. Wie man in den Fig. 2 und 3 erkennt, weist das Gehäuse 16 der Eingabetastatur 14 an seiner Unterseite einen gegenüber der Gehäuseumfangswand geringfügig einwärts versetzten Sockel 44 auf, dessen Aussenabmessungen so gewählt sind, dass die Eingabetastatur 14 mit dem Sockel 44 gerade in die Aufnahmemulde 38 passt, wie dies in der Fig. 3 zu erkennen ist. Dabei steht die Eingabetastatur 14 mit dem Sockel 44 auf einer an der Innenseite der Randleiste 42 umlaufenden Stufe 46 auf. In der in der Fig. 3 dargestellten eingesetzten Stellung ist die Eingabetastatur 14 gegenüber der Ausgabeeinheit 22 unverrückbar, jedoch aus dieser leicht herausnehmbar, so dass die Eingabetastatur 14 ohne Mühe getrennt von der taktilen Ausgabeeinheit 22 verwendet werden kann. Um dies zu ermöglichen, ist die Eingabetastatur 14 über ein längeres Kabel 48 mit der taktilen Ausgabeeinheit 22 verbunden. Im eingesetzten Zustand ist das Verbindungskabel 48 in einem unterhalb der Eingabetastatur 14 in der Aufnahmemulde 38 vorgesehenen Kabelstauraum 50 untergebracht.

Sämtliche Bedienungselemente wie beispielsweise auch ein Netzschalter 52 sind an der Oberschale 36 angebracht oder befinden sich oberhalb des umlaufenden Randes 34 der Unterschale 32, so dass sie beim Einsetzen der Einheit 10 mit der Unterschale 32 in eine nicht dargestellte Öffnung der Tischplatte 12 oberhalb der Tischplatte liegen und damit zugänglich sind, wie dies durch die strichpunktierte Linie 54 in Fig. 3 angedeutet ist.

Wenn die Eingabetastatur 14 in die Aufnahmemulde 38 eingesetzt ist, liegen die Deckfläche 18 der Eingabetastatur 14 und die Deckfläche 26 der Ausgabeeinheit 22 in einer schräg zur Bedienungsperson hin abfallenden Ebene, wie man dies am besten in der Fig. 3 erkennt.

Das taktile Anzeigefeld 28 umfasst zwei Braille-Ausgabezeilen 56 und 58 mit je vierzig Zeichenstellen 60 (sogenannte Formen) entsprechend einer Hälfte einer üblicherweise achtzig Zeichenstellen umfassenden Bildschirmzeile. Jede der Ausgabezeilen 56 und 58 weist an ihrem – von der Bedienungsperson aus gesehen – linken Ende von den Zeichenstellen 60 durch einen Zwischenraum 62 getrennt zwei weitere Zeichenstellen 64 auf, die beispielsweise zur Darstellung der Zeilennummer und/oder einer Betriebsstatusinformation oder für Fehlermeldungen verwendet werden können. Diese elektronisch ansteuerbaren Braille-Zeilen als solche sind bekannt und werden daher nicht näher erläutert.

Parallel zu jeder Braille-Zeile erstreckt sich über deren gesamte Länge jeweils eine Aufnahmenut 66 bzw. 68, die in der Deckfläche 26 des Gehäuses 24 ausgebildet ist und zur Aufnahme einer Braille-Informationsleiste 70 (siehe Fig. 5) bestimmt ist. Wie man in Fig. 4 erkennt, weisen die Aufnahmenuten 66, 67 an ihrem linken Ende jeweils eine kleine Vertiefung oder Mulde 72 auf. Sie soll das Herausnehmen der Leisten 70 aus den Aufnahmenuten 66 bzw. 68 erleichtern. Drückt man in dem Bereich der Mulde 72 auf das Ende der jeweiligen Leiste 70, so schwenkt diese aus der in der Fig. 4 durch ausgezogene Linien dargestellten Stellung in die durch strichpunktierte Linien angedeutete Stellung und kann dann leicht erfasst und aus der Aufnahmenut herausgenommen werden.

Die Fig. 5 zeigt den Aufbau eines Informationsstreifens 16. An dem in der Fig. 5 linken Ende ist in zwei Kennungsstellen 74 beispielsweise die Streifennummer angegeben. Nach rechts hin schliessen sich durch einen Zwischenraum 76 von den Kennungsstellen 74 getrennt vierzig Zeichen 78 an, die die eigentliche Information tragen. Wird der Informationsstreifen 70 in einer der Nuten 66, 68 eingelegt, so fluchten die Zeichenstellen 74 und 78 sowie der Zwischenraum 76 jeweils mit den Zeichenstellen 64 und 60 sowie dem Zwischenraum 62 der Ausgabezeilen 56 und 58. Der Zwischenraum 76 bei dem Informationsstreifen 70 dient ferner noch dazu, ein falsches Einlegen des Informationsstreifens zu verhindern.

Der Informationsinhalt eines Informationsstreifens 70 kann beispielsweise die Kopfzeile einer Tabelle oder die Stellennumerierung der Braille-Zeilen sein. Die Leisten können für den jeweiligen Zweck auf einfache Weise hergestellt und für das jeweils zu bearbeitende Programm in die Aufnahmenut eingelegt werden.

Die von der Bedienungsperson aus gesehen rechts neben dem Anzeigefeld 28 angeordnete Steuertastatur 30 umfasst einen Ziffernblock sowie Steuertasten 80, 82, 84 und 86. Mittels der Tasten des Ziffernblockes kann beispielsweise die Nummer der Zeile eingegeben werden, deren Inhalt auf den taktilen Ausgabezeilen 56, 58 angezeigt werden soll. Mittels der Steuertasten 80 und 82 kann die jeweils nächst höhere oder tiefere Zeile zur Ausgabe aufgerufen werden. Mit der Steuertaste 84 kann die Zeile, in welcher der Cursor steht, zur Ausgabe aufgerufen werden. Ferner kann der Cursor, der durch ein Sonderzeichen dargestellt wird, weggeschaltet werden und das an dieser Zeichenstelle stehende Datenzeichen dargestellt werden. Eine Überlagerung von Zeichen, wie dies auf dem Bildschirm möglich ist, kann nicht ertastet werden und muss daher auf diese Weise ersetzt werden. Mit der Steuertaste 86 schliesslich kann der Betriebszustand der Steuertastatur, der z.B. sonst in einem Lampenfeld oder durch Tastenstellung angezeigt wird, auf der taktilen Anzeige zur Ausgabe gebracht werden.

Die Verwaltung der zur Ausgabe auf dem Braille-Ausgabezeilen 56 und 58 bestimmten Information, die Aufnahme der Steuereingaben von der Steuertastatur und die Ausgabe auf die taktilen Ausgabezeilen geschieht in an sich bekannter Weise durch eine in dem Gehäuse 24 angeordnete Mikroprozessorelektronik 25. Diese ist parallel zum Bildschirm an eine Datenübertragungsleitung zwischen Bildschirm und Datenverarbeitungseinrichtung angeschlossen. Eine Änderung der Bildschirmstation und/oder der Datenverarbeitungsanlage oder der Programme ist nicht erforderlich.

Gegebenenfalls kann die Steuertastatur auch durch eine Umschaltfunktion der Eingabetastatur ersetzt werden. In diesem Falle müssen alle Ausgangssignale der Eingabetastatur durch die Mikroprozessorelektronik geprüft werden. Die Ausgangssignale der Eingabetastatur werden im umgeschalteten Zustand derselben zur Steuerung der taktilen Ausgabezeilen ausgewertet. Ihre Weitergabe zur Datenverarbeitungsanlage wird verhindert.

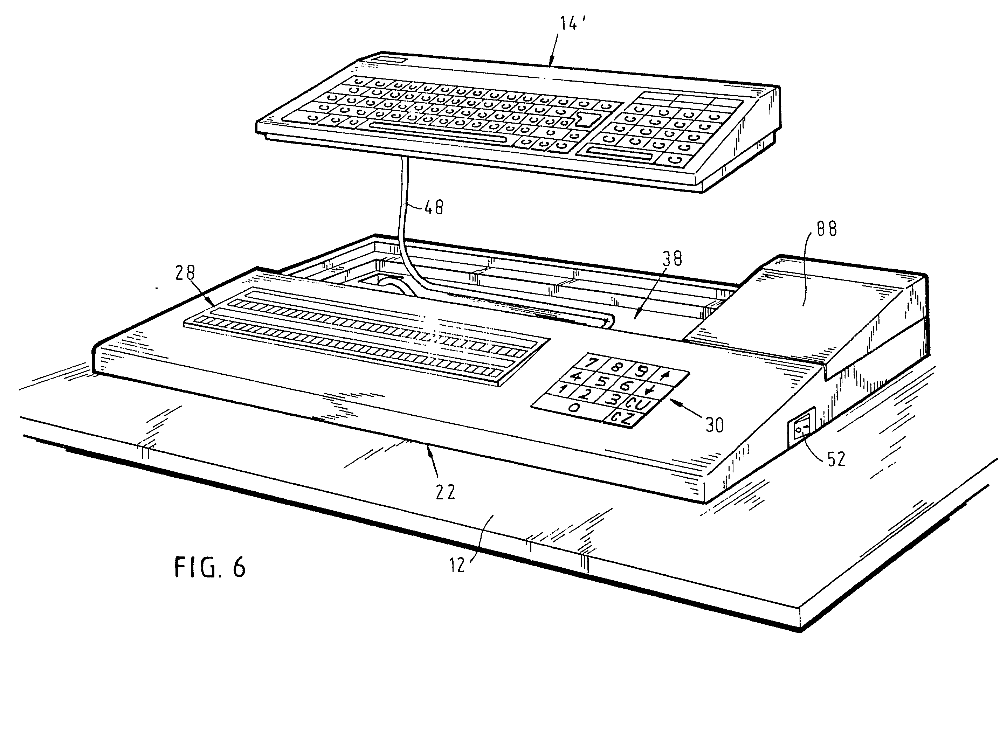

Fig. 6 zeigt eine etwas abgewandelte Ausführungsform der erfindungsgemässen Informationsein- und -ausgabeeinheit, die sich von der Ausführungsform gemäss den Fig. 1 bis 5 dadurch unterscheidet, dass die Eingabetastatur 14' schmaler als die taktile Ausgabeeinheit 22 ist. Der dadurch in der Aufnahmemulde 38 freibleibende Raum wird durch einen Einsatz 88 ausgefüllt, der in seiner äusseren Form der Eingabetastatur 14' angepasst ist und diese so ergänzt, dass der Umriss der gesamten Einheit wieder dem Umriss der in den Fig. 1 bis 5 dargestellten Einheit 10 entspricht. Der Einsatz 88 kann beispielsweise einen Lautsprecher enthalten, über den die Bedienungsperson Leitinformationen oder Betriebszustandsinformationen auf akkustischem Wege erhalten kann.

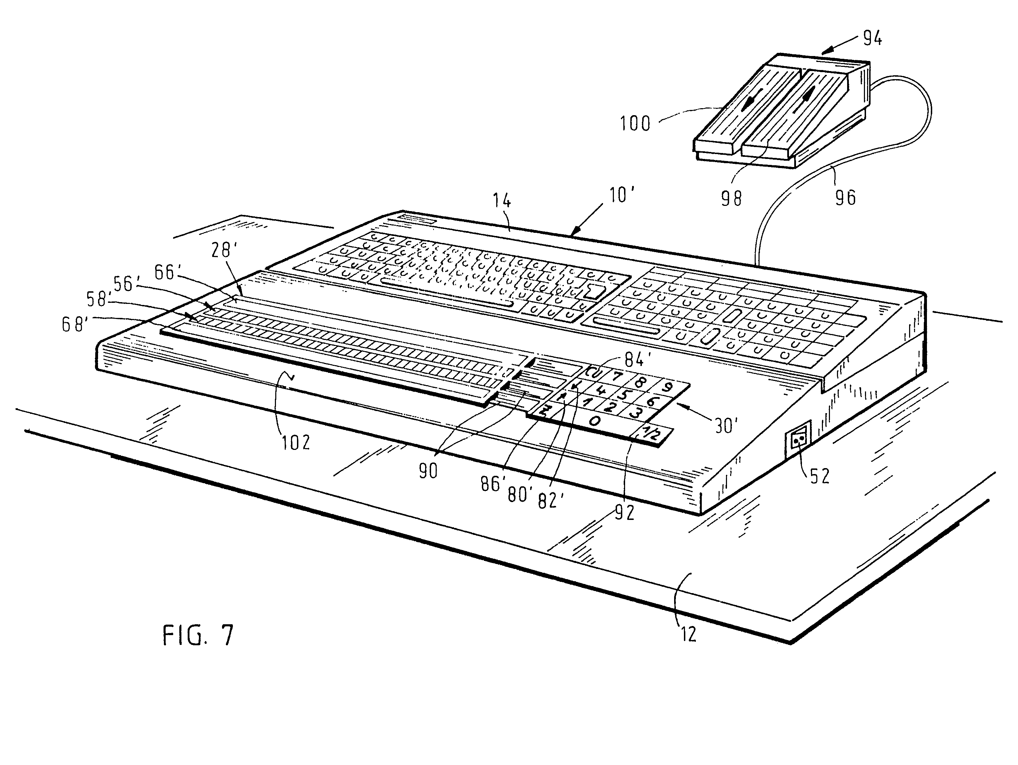

Die Ausführungsform gemäss der Fig. 7 unterscheidet sich von den Ausführungsformen gemäss den Fig. 1 bis 5 bzw. gemäss der Fig. 6 durch eine andere Gestaltung des taktilen Anzeigefeldes 28' und der Steuertastatur 30'. Innerhalb des taktilen Anzeigefeldes 28' sind die beiden taktilen Ausgabezeilen 56' und 58' unmittelbar untereinander angeordnet, während die Aufnahmenut 68' nun unter bzw. vor der zweiten Ausgabezeile 58' angeordnet ist. Die unmittelbar nebeneinander liegenden Braille-Zeilen erleichtern der Bedienungsperson das schnelle Abtasten der Zeichen, während die auf dem Informationsstreifen 70 enthaltene Leitinformation der Bedienungsperson ohnehin bekannt ist und nicht jedesmal aufs neue abgetastet werden muss, so dass diese Informationsleiste oder dieser Informationsstreifen ohne Nachteil für die Arbeit der Bedienungsperson unterhalb der Ausgabezeile 58' angeordnet werden kann.

Im Gegensatz zu den Ausführungsformen gemäss den Fig. 1 bis 6 sind bei der Ausführungsform gemäss Fig. 7 die Steuertasten 80' bis 86' auf der linken Seite des Ziffernblockes angeordnet und zwar so, dass jede Steuertaste in Verlängerung einer Ausgabezeile oder Aufnahmenut angeordnet ist. Von der jeweiligen Aufnahmenut oder Ausgabezeile führt dabei eine Führungsnut 90 zu der anschliessenden Steuertaste. Sie erleichtert in Verbindung mit den zwischen den Nuten angeordneten Rippen den Übergang von dem taktilen Anzeigefeld 28' zu den Steuertasten 80' bis 86'. Dabei ist vorzugsweise die eine Folgezeile aufrufende Steuertaste 80 im Anschluss an die zweite Braille-Zeile angeordnet, so dass der Benutzer nach dem Lesen einer Zeile die Folgezeile aufrufen kann, ohne mit der Hand weite Wege zurücklegen zu müssen. Der Finger wird dabei durch die Führungsnut 90 zwangsweise von der Braille-Zeile auf die Steuertaste und zurück geleitet. Die Steuertaste 86' ist zweckmässigerweise ebenfalls möglichst nahe an dem Ende der zweiten Braille-Zeile anzuordnen. Nach ihrer Betätigung wird auf den letzten Zeichenstellen der Braille-Zeile oder taktilen Ausgabezeile 58' die Nummer der Bildschirmzeile angegeben, die zuletzt im Anzeigefeld 28' angezeigt wurde. In diesem Fall können dann die separaten Zeichenstellen für die Anzeige der Zeilennummer entfallen.

In dem Ausführungsbeispiel gemäss Fig. 7 umfasst die Steuertastatur 30' noch eine Rasttaste 92, die eine unterschiedliche Zuordnung der Datenzeichen zu den taktilen Ausgabezeilen 56', 58' ermöglicht: In ihrer ersten Raststellung werden in der Ausgabezeile 56' die Stellen 1 bis 40 und in der zweiten Ausgabezeile 58' die Stellen 41 bis 80 einer angewählten Bildschirmzeile dargestellt. In der zweiten Raststellung der Taste 92 werden in der ersten Ausgabezeile 56' die Stellen 1 bis 40 einer angewählten Bildschirmzeile und in der Ausgabezeile 58' die Stellen 1 bis 40 der nächstfolgenden Bildschirmzeile dargestellt. Dadurch erscheint auf dem Anzeigefeld 28' auch dann eine zusammenhängende Information, wenn aus organisatorischen Gründen der Bildschirm in einen linken und einen rechten Anzeigeteil geteilt ist.

Zumindest die Steuerfunktion der Steuertaste 80' (nächste Zeile) und der Steuertaste 82' (vorige Zeile) können auch von einem Fusssteuergerät 94 übernommen werden, das über ein Kabel 96 an die Informationsein- und -ausgabeeinheit 10' angeschlossen ist. Dabei entsprechen die Funktionen der Steuertasten 80' und 82' Fusstasten 98 bzw. 100. Zum flüssigen Lesen braucht die Bedienungsperson in diesem Falle die Hände nicht mehr vom Anzeigefeld 28' zu nehmen. Sie verliert somit auch nicht mehr so leicht die Orientierung auf dem Gerät.

Die vorstehende Beschreibung zeigt, dass mit der Erfindung ein Gerät geschaffen wurde, welches die Arbeit einer sehbehinderten Bedienungsperson an einer Bildschirmstation ermöglicht, ohne dass hierzu an den Bedienungselementen der Bildschirmstation irgendwelche Änderungen vorgenommen werden müssen. Die Bildschirmstation kann wie bisher von einer sehenden Person bedient werden. Gleichzeitig kann die sehbehinderte Bedienungsperson jedoch rasch und entspannt die ausgegebene Information abtasten und findet Orientierungshilfen für die Bedienung der Steuertastatur und Eingabetastatur, die jeweils in einer festen räumlichen Beziehung zu dem taktilen Anzeigefeld stehen.

Die Bedienungsperson kann die tastenden Hände auf eine Auflagefläche 102 vor dem taktilen Anzeigefeld 28, 28' auflegen, so dass die Hände und Arme beim Tasten nicht so rasch ermüden. Da das Anzeigefeld unmittelbar vor der Eingabetastatur liegt, besteht keine Gefahr, dass die Bedienungsperson beim Abtasten des Anzeigefeldes 28 aus Versehen mit dem Handballen oder dem Jakkenärmel die Eingabetastatur betätigt.

## Patentansprüche

1. Informationsein- und -ausgabeeinheit für Datenverarbeitungseinrichtungen, umfassend eine Eingabetastatur (14; 14') und ein taktiles Anzeigefeld (28; 28') mit einer Steuertastatur (30; 30') zur taktilen Datenanzeige für Sehbehinderte, dadurch gekennzeichnet, dass die Eingabetastatur (14; 14'), die Steuertastatur (30; 30') und das taktile Anzeigefeld (28; 28') in einer Ebene angeordnet sind, dass das taktile Anzeigefeld (28; 28') mit der Steuertastatur (30; 30') – von der Bedienungsperson aus gesehen – vor der Eingabetastatur (14; 14') liegt, dass vor dem taktilen Anzeigefeld (28; 28') eine Handauflagefläche (102) vorgesehen ist, dass das taktile Anzeigefeld (28; 28') mit der Steuertastatur (30; 30') in einem ersten Gehäuse (24) und die Eingabetastatur (14; 14') in einem von diesem getrennten zweiten Gehäuse (16) angeordnet ist und dass das erste Gehäuse (24) eine zur Aufnahme des zweiten Gehäuses (16) bestimmte Aufnahmemulde aufweist, deren Abmessungen auf die Aussenabmessungen des zweiten Gehäuses (16) derart abgestimmt sind, dass die Deckflächen (26, 18) beider Gehäuse (24, 16) aneinander anschliessend in einer Ebene liegen.

2. Informationsein- und -ausgabeeinheit nach Anspruch 1, dadurch gekennzeichnet, dass das zweite Gehäuse (16) an seiner Unterseite einen Sockel (44) aufweist, der um die Wandstärke der Gehäusewände (42) des ersten Gehäuses (24) zurückversetzt und zum Eingriff in die Aufnahmemulde (38) des ersten Gehäuses (24) bestimmt ist.

3. Informationsein- und -ausgabeeinheit nach Anspruch 1 oder 2, dadurch gekennzeichnet, dass in dem ersten Gehäuse (24) in der Aufnahmemulde (38) ein Kabelstauraum (50) ausgebildet ist, dessen Boden (40) eine Durchtrittsöffnung für ein Anschlusskabel (48) der Eingabetastatur (14) aufweist.

4. Informationsein- und -ausgabeeinheit nach einem der Ansprüche 1 bis 3, dadurch gekennzeichnet, dass das erste Gehäuse (24) aus einer wannenförmigen Unterschale (32) und einer mit dieser verbindbaren Oberschale (36) besteht, die ringsherum geringfügig über die Unterschale (32) vorsteht.

5. Informationsein- und -ausgabeeinheit nach einem der Ansprüche 1 bis 4, dadurch gekennzeichnet, dass die Höhe des zweiten Gehäuses (16) an dessen rückwärtigem Ende annähernd gleich der Höhe des ersten Gehäuses (24) an dessen vorderen Ende ist.

6. Informationsein- und -ausgabeeinheit nach einem der Ansprüche 1 bis 5, dadurch gekennzeichnet, dass das taktile Anzeigefeld (28; 28') mindestens eine Ausgabezeile (56, 58; 56', 58') aufweist und dass parallel zu der Ausgabezeile (56, 58; 56', 58') und angrenzend an diese in der Gehäusedeckfläche (26) mindestens eine Aufnahmenut (66, 68; 66', 68') zur Aufnahme eines Informationsstreifens (70) mit taktilen Zeichen (74, 78) ausgebildet ist.

7. Informationsein- und -ausgabeeinheit nach Anspruch 6, dadurch gekennzeichnet, dass in der Grundfläche der Aufnahmenut (66, 68; 66', 68') entlang eines ihrer Ränder eine Vertiefung (72) ausgebildet ist.

8. Informationsein- und -ausgabeeinheit nach Anspruch 6 oder 7, dadurch gekennzeichnet, dass mindestens zwei taktile Ausgabezeilen (56', 58') untereinander angeordnet sind und dass oberhalb und unterhalb der beiden Ausgabezeilen (56', 58') je eine Aufnahmenut (66', 68') vorgesehen ist.

9. Informationsein- und -ausgabeeinheit nach einem der Ansprüche 1 bis 8, dadurch gekennzeichnet, dass die Steuertastatur (30') annähernd im gleichen Abstand von der Vorderkante des ersten Gehäuses (24) wie das Anzeigefeld (28') neben demselben angeordnet ist und dass Fingerführungen (90) zwischen dem Anzeigefeld (28') und den Tasten der Steuertastatur (30') vorgesehen sind.

10. Informationsein- und -ausgabeeinheit nach Anspruch 9, dadurch gekennzeichnet, dass die Fingerführungen (90) von Rippen oder Nuten an der Gehäusedeckfläche (26') gebildet sind, die sich von dem jeweiligen Ende einer Zeile des Anzeigefeldes (28') zu den Tasten der Steuertastatur (30') erstrecken.

11. Informationsein- und -ausgabeeinheit nach einem der Ansprüche 1 bis 10, dadurch gekennzeichnet, dass bei zwei taktilen Ausgabezeilen (56, 58; 56′, 58′) jede eine Anzahl von Zeichen (60) enthält, die der Hälfte der in einer Bildschirmzeile eines Datensichtgerätes enthaltenen Zeichenanzahl entspricht, und dass im Anschluss an das letzte Zeichen der zweiten Ausgabezeile (58′) eine den Zeilenvorschub steuernde Taste (80′) der Steuertastatur (30′) angeordnet ist.

12. Informationsein- und -ausgabeeinheit nach einem der Ansprüche 1 bis 11, dadurch gekennzeichnet, dass die Steuertastatur (30′) einen Umschalter (92) enthält, in dessen erster Stellung die Zeichen einer Bildschirmzeile fortlaufend auf eine Mehrzahl von Ausgabezeilen (56′, 58′) verteilt werden und in dessen zweiter Stellung jede Ausgabezeile (56′, 58′) einen ersten Abschnitt einer neuen Bildschirmzeile wiedergibt.

**Claims**

1. An information input and output unit for data processing equipments, comprising an input keyboard (14; 14′) and a tactile read-out panel (28; 28′) with a control keyboard (30; 30′) for tactile data display for weak-sighted persons, characterized in that said input keyboard (14; 14′), said control keyboard (30; 30′) and said tactile read-out panel (28; 28′) are arranged in one plane, that said tactile read-out panel (28; 28′) with said control keyboard (30; 30′) is in front of said input keyboard (14; 14′) as seen by the operator, that a hand rest surface (102) is provided in front of said tactile read-out panel (28; 28′), that said tactile read-out panel (28; 28′) with said control keyboard (30; 30′) is located in a first case (24) and said input keyboard (14; 14′) is located in a second case (16) separate from said first case, and that said first case (24) has a receiving basin for receiving said second case (16), the dimensions of said basin being matched to the outer dimensions of said second case (16) such that the cover surfaces (26, 18) of both cases (24, 16) lie adjacent to each other in one plane.

2. An information input and output unit as set forth in claim 1, characterized in that said second case (16) has on its underside a base (44) which is set back by the thickness of the case walls (42) of said first case (24) and is intended for engaging in said receiving basin (38) of said first case (24).

3. An information input and output unit as set forth in claim 1 or 2, characterized in that a cable storage space (50) is defined in the receiving basin (38) of said first case (24), the bottom portion (40) of said cable storage space having an opening for a connecting cable (48) of said input keyboard (14).

4. An information input and output unit as set forth in any of claims 1 to 3, characterized in that said first case consists of a trough-like lower pan (32) and an upper pan (36) which can be joined with said lower pan and which projects slightly beyond said lower pan (32) all around.

5. An information input and output unit as set forth in any of claims 1 to 4, characterized in that the height of said second case (16) at the rear end thereof is approximately the same as the height of said first case (24) at the front end thereof.

6. An information input and output unit as set forth in any of claims 1 to 5, characterized in that said tactile read-out panel (28; 28′) has at least one output line (56, 58; 56′, 58′), and that parallel to said output line (56, 58; 56′, 58′) and bordering thereon at least one receiving groove (66, 68; 66′, 68′) is formed in the cover surface (26) of the case for receiving an information strip (70) with tactile characters (74, 78).

7. An information input and output unit as set forth in claim 6, characterized in that a depression (72) is formed in the base surface of said receiving groove (66, 68; 66′, 68′) along one of its edges.

8. An information input and output unit as set forth in claim 6 or 7, characterized in that at least two tactile output lines (56′, 58′) are arranged one below the other, and that one receiving groove (66′, 68′) each is provided above and below the two output lines (56′, 58′).

9. An information input and output unit as set forth in any of claims 1 to 8, characterized in that said control keyboard (30′) is arranged at approximately the same distance from the front edge of said first case (24) as is said read-out panel (28′) beside the latter, and that finger guides (90) are provided between said read-out panel (28′) and the keys of said control keyboard (30′).

10. An information input and output unit as set forth in claim 9, characterized in that said finger guides (90) are formed by ribs or grooves on the cover surface (26′) of the case, said ribs or grooves extending from the respective end of one line of said read-out panel (28′) to the keys of said control keyboard (30′).

11. An information input and output unit as set forth in any of claims 1 to 10, characterized in that in case of two tactile output lines (56, 58; 56′, 58′) each contains a number of characters (60) corresponding to one half of the number of characters contained in the display screen line of a visual data unit, and that next to the last character of said second output line (58′) there is arranged a key (80′) of said control keyboard (30′), said key controlling the line feed.

12. An information input and output unit as set forth in any of claims 1 to 11, characterized in that said control keyboard (30′) includes a changeover switch (92), the characters of a display screen line being continuously alloted to a plurality of output lines (56′, 58′) in a first position of said change-over switch and each output line (56′, 58′) reproducing a first section of a new display screen line in a second position of said change-over switch.

**Revendications**

1. Unité d'entrée et de sortie d'informations pour des dispositifs de traitement des données, comportant un clavier d'entrée (14; 14′) et une console d'affichage tactile (28; 28') munie d'un clavier de commande (30; 30') pour l'affichage tactile de données pour des non-voyants, caractérisée en ce que le clavier d'entrée (14; 14'), le clavier de commande (30; 30') et la console d'affichage tactile (28; 28') sont disposées dans un plan, que la console d'affichage tactile (28; 28') avec le clavier de commande (30; 30') se trouve devant le clavier d'entrée – vu du côté de l'utilisateur –, qu'on prévoit devant la console d'affichage tactile (28; 28') une surface d'appui pour les mains (102), que la console d'affichage tactile (28; 28') avec le clavier de commande (30; 30') est disposée dans un premier carter (24) et le clavier d'entrée (14; 14') dans un second carter (16) séparé de celui-ci, et que le premier carter (24) comporte une cuvette de logement prévue pour loger le second carter (16) et dont les dimensions sont adaptées sur les dimensions extérieures du second carter (16) de telle sorte que les surfaces de recouvrement (26, 18) des deux carters (16, 24) se raccordent l'un à l'autre dans un même plan.

2. Unité d'entrée et de sortie d'informations selon la revendication 1, caractérisée en ce que le second carter (16) comporte sur son côté inférieur un socle (44) qui est décalé vers l'arrière de l'épaisseur de la paroi (42) du premier carter (24) et est prévu pour pénétrer dans la cuvette de logement (38) du premier carter (24).

3. Unité d'entrée et de sortie d'informations selon la revendication 1 ou 2, caractérisé en ce qu'il est formé dans la cuvette de logement (38) du premier carter (24) un logement de rangement de câble (50) dont le fond (40) comporte un orifice de passage pour un câble de raccordement (48) du clavier d'entrée (14).

4. Unité d'entrée et de sortie d'informations selon l'une des revendications 1 à 3, caractérisée en ce que le premier carter (24) est constitué par une coquille inférieure (32) en forme de cuvette et une coquille supérieure (36) pouvant être reliée à la précédente, qui dépasse légèrement tout autour au-dessus de la coquille inférieure (32).

5. Unité d'entrée et de sortie d'informations selon l'une des revendications 1 à 4, caractérisée en ce que la hauteur du second carter (16) à son extrémité postérieure est sensiblement égale à la hauteur du premier carter (24) à son extrémité antérieure.

6. Unité d'entrée et de sortie d'informations selon l'une des revendications 1 à 5, caractérisée en ce que la console d'affichage tactile (28, 28') comporte au moins une ligne de sortie (56, 58; 56', 58') et qu'au moins une nervure de logement (66, 68;

66', 68') pour recevoir une bande d'informations (70) avec des signes tactiles (74, 78) est formée parallèlement à la ligne de sortie (56, 58; 56', 58') et adjacente à celle-ci dans la surface de recouvrement (26) du carter.

7. Unité d'entrée et de sortie d'informations selon la revendication 6, caractérisée en ce qu'une cavité (72) est formée dans la surface de base de la rainure de logement (66, 68; 66', 68') le long d'un de ses bords.

8. Unité d'entrée et de sortie d'informations selon la revendication 6 ou 7, caractérisée en ce qu'au moins deux lignes de sortie tactiles (56', 58') sont disposées l'une en-dessous de l'autre, et qu'on prévoit au-dessus et en-dessous des deux lignes de sortie (56', 58') respectivement une rainure de logement (66', 68').

9. Unité d'entrée et de sortie d'informations selon l'une des revendications 1 à 8, caractérisée en ce que le clavier de commande (30') est situé sensiblement à la même distance du bord antérieur du premier carter (24) que la console d'affichage (28') située à côté, et qu'on prévoit des guidages pour les doigts (90) entre la console d'affichage (28') et les touches du clavier de commande (30').

10. Unité d'entrée et de sortie d'informations selon la revendication 9, caractérisée en ce que les guidages pour les doigts (90) sont constituées par des nervures ou des gorges sur la surface de recouvrement du carter (26') qui s'étendent depuis chaque extrémité des lignes de la console d'affichage (28') jusqu'aux touches du clavier de commande (30').

11. Unité d'entrée et de sortie d'informations selon l'une des revendications 1 à 10, caractérisée en ce que, lorsqu'il y a deux lignes de sortie (56, 58; 56', 58'), chacune contient un nombre de signes (60) qui correspond à la moitié du nombre de signes contenu dans une ligne d'un écran de visualisation de données, et qu'une touche (80') du clavier de commande (30') commandant l'avance des lignes est montée se raccordant au dernier signe de la seconde ligne de sortie (58').

12. Unité d'entrée et de sortie d'informations selon l'une des revendications 1 à 11, caractérisée en ce que le clavier de commande (30') comporte un commutateur (92), dans la première position duquel les signes d'une ligne d'écran de visualisation sont répartis en continu sur une multiplicité de lignes de sortie (56', 58'), et dans la seconde position duquel chaque ligne de sortie (56', 58') reproduit une première portion d'une nouvelle ligne de l'écran de visualisation.

FIG.1

FIG. 2

7 8 9
4 5 6
1 2 3 CU
0 CZ

14

44

48

42

46

38

42

42

28

30

52

22

12

0 061 595

74  70  78

76

FIG. 5

14

18  46  26  70  56  70  58  36  54

42  44  25

48  40  50  34  32

FIG. 3

70  70  66

24  72

FIG. 4

0 061 595

FIG. 6

FIG. 7

0 061 595